# EUROPÄISCHE PATENTSCHRIFT

(11) **EP 1 188 632 B1**
(45) Veröffentlichungstag und Bekanntmachung des Hinweises auf die Patenterteilung: **10.10.2007**
(21) Anmeldenummer: 01119571.6
(22) Anmeldetag: 16.08.2001
(51) Int. Cl.: B60T 8/00

(54) **Bremseingriff-Regelungsverfahren zur Verhinderung von Radschlupf**
Brake actuation control method for brake slip avoidance
Procédé de freinage pour véhicules à moteur avec réglage de patinage

(30) Priorität: 13.09.2000 DE 10045225
(43) Veröffentlichungstag der Anmeldung: 20.03.2002
(73) Patentinhaber: Bayerische Motoren Werke Aktiengesellschaft, 80809 München (DE)
(72) Erfinder: Billig, Christian, 80939 München (DE); Fischer, Gerhard, 80992 München (DE)

(56) Entgegenhaltungen:
- US-A- 4 589 511
- US-A- 4 860 208
- US-A- 5 752 753

## Beschreibung

Die Erfindung betrifft ein Bremseingriffs-Regelungsverfahren zur Verhinderung von Radschlupf an den über ein Differential angetriebenen Rädern eines Kraftfahrzeugs, insbesondere eines allradangetriebenen Kfz's, wobei aufgrund eines geeigneten Signals das eine mangelhafte Traktion aufweisende Rad abgebremst wird. Zum technischen Umfeld wird lediglich beispielshalber auf die DE 195 44 445 A1 verwiesen, und weiterhin auf die nicht vorveröffentlichte deutsche Patentanmeldung 199 46 463.4.

Ein weiteres gattungsgemäßes Bremseingriffs-Regelungsverfahren ist aus dem Dokument US 5 752 753 bekannt.

Zur Verhinderung von Radschlupf bzw. zur Verringerung der Auswirkung von ggf. auftretendem Radschlupf beim Vortrieb eines mehrrädrigen Kraftfahrzeuges sind sog. Differentialsperren bekannt, bei Aktivierung derselben die eigentliche Differentialfunktion unterbunden oder zumindest abgeschwächt wird, so dass das (oder die) ein ausreichende Traktion aufweisende Rad (Räder) das vom Kfz.-Antriebsaggregat zugeführte Vortriebsmoment übertragen kann (können). Diese Funktion einer Differentialsperre ist alternativ aber auch durch einen gezielten radindividuellen Bremseneingriff erzielbar, nämlich wenn dasjenige Rad, welches zum "Durchdrehen" neigt (d.h. eine mangelhafte Traktion aufweist), abgebremst bzw. durch die Betriebsbremse des Kraftfahrzeugs zumindest teilweise blockiert wird.

Üblicherweise wird auftretender bzw. sich abzeichnender Radschlupf, d.h. eine mangelhafte Traktion eines angetriebenen Rades eines mehrrädrigen Kraftfahrzeuges anhand von Raddrehzalzensoren erkannt, die in Verbindung mit einem heutzutage praktisch an allen Kraftfahrzeugen vorgesehenen Antiblockiersystem an jedem Fahrzeugrad vorhanden sind. Aus signifikanten Drehzahlunterschieden zwischen den einzelnen Rädern kann auf auftretenden Radschlupf geschlossen werden.

Wird nun bspw. oder insbesondere bei einem Anfahrvorgang im Gelände oder auf unebener Fahrbahn oder auf Fahrbahnen mit radindividuell stark unterschiedlichen Reibwerten zwischen Fahrbahnoberfläche und Rad/Reifen ein bspw. an einem einzigen Rad auftretender Radschlupf erkannt, so kann dieses Rad abgebremst bzw. durch Anlegen von Bremsdruck blockiert werden, um das vom Antriebsaggregat zur Verfügung gestellte Vortriebs-Drehmoment dem oder den anderen angetriebenen Rad/Rädern zur Verfügung zu stellen. Wie bereits erwähnt wurde, wird der auftretende Radschlupf üblicherweise daran erkannt, dass das entsprechende Rad eine deutlich höhere Drehzahl als die anderen Räder des Fahrzeugs besitzt. Wird nun dieses "durchdrehende" Rad abgebremst, so nimmt dessen Drehzahl selbstverständlich ab, woraufhin eine entsprechende elektronische Steuereinheit an diesem Rad keinen weiteren Schlupf feststellen kann, so dass dann in einem natürlichen Regelkreis die zugehörige Rad-Bremse wieder gelöst wird.

Insbesondere bei einem Anfahrvorgang oder bei Fahrten im Gelände mit geringen Geschwindigkeiten (und den dabei auftretenden Verschränkungen an allradgetriebenen Fahrzeugen) ist möglicherweise nach einem Durchlauf des soeben geschilderten Regelkreises eine die mangelhafte Traktion des bspw. einen Rades hervorrufende Geländeformation oder Fahrbahnunebenheit oder dgl. noch nicht überwunden, so dass an diesem Rad neuerlich Schlupf auftritt, woraufhin die Bremse dieses Rades neuerlich aktiviert wird.

Zwar kann mit diesem soeben beschriebenen Regelkreis letztlich das Fahrzeug weiterbewegt d.h. das entsprechende Hindernis oder dgl. überwunden werden, jedoch ist das dabei festzustellende Fahrverhalten unbefriedigend, nachdem sich hiermit eine quasi ruckartige Fortbewegung einstellt. Bis zur Überwindung des Hindernisses oder dgl. wird nämlich am entsprechenden, eine mangelhafte Traktion aufweisenden Rad fortlaufend abwechselnd die Bremse aktiviert und wieder gelöst.

Eine Abhilfemaßnahme für diese geschilderte Problematik aufzuzeigen, ist Aufgabe der vorliegenden Erfindung.
Die Lösung dieser Aufgabe ist dadurch gekennzeichnet, dass ausgehend von einem erstmaligen Abbremsen dieses Rades und unabhängig von weiteren die radindividuelle Traktion wiederspiegelnden Signalen der aufgebrachte Bremsdruck solange aufrecht erhalten wird, bis die Fahrzeug-Fahrgeschwindigkeit einen Schwellwert überschritten hat und/oder bis das Fahrzeug eine bestimmte Wegstrecke zurückgelegt hat. Vorteilhafte Weiterbildungen sind Inhalt der Unteransprüche.

Erfindungsgemäß wird somit ein eine Differentialsperrfunktion erfüllender Bremseneingriff zumindest unter bestimmten Betriebsbedingungen nicht alleine durch den Radschlupf geregelt, sondern wird nach einer Aktivierung, die bspw. weiterhin durch festgestellten Radschlupf ausgelöst wurde, in Abhängigkeit von weiteren geeigneten Randbedingungen für eine gewisse Dauer aufrecht erhalten. Wird somit insbesondere bei sehr geringen Fahrgeschwindigkeiten mittels eines geeigneten Signals (bspw. von den Rad-Drehzahlsensoren) an einem angetriebenen Rad auftretender Schlupf erkannt, so wird dieses Rad wie bekannt abgebremst. Erfindungsgemäß wird dieses Abbremsen nun solange aufrecht erhalten, bis (mit größter Wahrscheinlichkeit) die diesen Radschlupf auslösende Geländeformation oder Fahrbahnunebenheit oder dgl. überwunden ist. Dies ist erfahrungsgemäß dann der Fall, wenn sich das Fahrzeug bereits mit einer gewissen Geschwindigkeit fortbewegt oder wenn das Fahrzeug seit dem entsprechenden Bremseneinriff, der durch erkannten Radschlupf oder allgemein durch ein eine mangelhafte Traktion anzeigendes Signal ausgelöst wurde, eine gewisse Wegstrecke zurückgelegt hat.

Bevorzugt liegt der genannte Schwellwert für die Fahrgeschwindigkeit, oberhalb dessen bzw. derer ein aufgrund von mangelhafter Traktion an einem Rad aktivierter Bremseneingriff wieder gelöst wird, in der Größenordnung zwischen 2 km/h und 5 km/h, d.h. sobald sich das Fahrzeug mit dieser Geschwindigkeit bewegt, wird die wegen Radschlupf oder dgl. aktivierte Radbremse wieder gelöst, wohingegen die Radbremse aktiviert bleibt, solange sich das Fahrzeug mit einer geringeren Geschwindigkeit als dem genannten Schwellwert bewegt. Entsprechendes gilt für das zweite alternative oder zusätzlich vorgesehene Kriterium, nämlich die zurückgelegte Wegstrecke, wobei ein kritischer Wert oder Schwellwert für diese seit dem erstmaligen Abbremsen zurückgelegte Wegstrecke in der Größenordnung zwischen 3 m und 10 m liegt. Wurde somit aufgrund irgendeines Signales (bspw. aufgrund von Radschlupf) eine mangelhafte Traktion an einem angetriebenen Fzg.-Rad erkannt und wurde dieses Rad daraufhin abgebremst, so wird unter Anwendung des sog. Wegstrecken-Kriteriums dieses Abbremsen unabhängig von anderen die radindividuelle Traktion wiederspiegelnden Signalen solange aufrechterhalten, bis das Fahrzeug eine Wegstrecke in der Größenordnung von 3 Metern bis 10 Metern zurückgelegt hat.

In einer weiteren Ausführungsform der vorliegenden Erfindung, die im unabhängigen Patentanspruch 3 angegeben ist, wird aus vorhandenen Höhenstandsinformationen der einzelnen Räder auf eine mangelhafte Traktion zumindest eines der Räder geschlossen, was im übrigen in der nicht vorveröffentlichten deutschen Patentanmeldung 199 46 463.4, ausführlicher beschrieben ist. Demnach geben die sog. Rad-Höhenstandsinfomationen d.h. die Radeinfederwege und Radausfederwege gegenüber dem Fzg.-Aufbau oder die Radaufstandskräfte oder von diesen Größen abgeleitete Größen, beispielsweise die entsprechenden Ausfeder- und Kraftraten, einen Aufschluss über die Bodenhaftung eines bestimmten Rades. Durch das Erfassen und Auswerten dieser Größen kann somit auf die Bodenhaftung oder Traktion eines einzelnen angetriebenen Rades oder die Entwicklung der Bodenhaftung geschlossen werden, und aus dieser Größe wiederum lässt sich auf einen zu erwartenden Schlupf schließen. Liegt dann ein zu erwartender Schlupf über einem bestimmten Grenzwert, so kann bereits ein Bremseingriff erfolgen, selbst wenn der tatsächliche Schlupf an einem einzelnen Rad noch nicht eine kritische Größe überschritten hat. In diesem Fall stellt ein Bremseingriff vor oder gleichzeitig bei Erreichen einer kritischen Schlupfgröße an einem Rad eine kontinuierliche Traktion sicher, wodurch ein Sicherheitszugewinn erreicht ist.

Erfindungsgemäß und zurückkommend auf die der vorliegenden Erfindung zugrundeliegende Aufgabe wird nun ausgehend von einem erstmaligen Abbremsen eines Rades aufgrund einer derartigen sog. "Höhenstandsinformation" der an dieses Rad angelegte Bremsdruck solange aufrecht erhalten, als die entsprechende Höhenstandsinformation im wesentlichen noch zutrifft. Auch auf diese Weise ist sichergestellt, dass keine quasi pendelnde Bremsenbetätigung erfolgt, wobei der Vollständigkeit halber noch darauf hingewiesen sei, dass durchaus die kennzeichnenden Merkmale der Ansprüche 1 und 3 kombiniert werden können, d.h. dass der aufgrund einer Höhenstandsinformation aufgebaute Bremsdruck zumindest solange aufrechterhalten wird, bis das Fzg. eine gewisse Wegstrecke zurückgelegt hat oder sich mit einer gewissen Geschwindigkeit bewegt.

Weiterhin wird vorgeschlagen, den an ein eine mangelhafte Traktion aufweisendes Rad angelegten Bremsdruck in seiner Größe variabel zu gestalten, und zwar in Abhängigkeit von sinnvollen Randbedingungen. Es ist nämlich vorteilhaft, wenn das entsprechende Rad tatsächlich nur soweit abgebremst wird, dass diese mangelhafte Traktion gerade eben unterbunden wird bzw. dass nur der unerwünschte Radschlupf unterbunden wird. Bis zu einem gewissen Grad kann jedoch dieses Rad dann weiterhin zum Vortrieb beitragen. Aus diesem Grunde wird vorgeschlagen, dass der Bremsdruck am jeweiligen Rad unter Berücksichtigung des diesem Rad zugeführten Antriebsdrehmomentes eingestellt wird.

Mit dem erfindungsgemäßen Bremseingriffs-Regelungsverfahren ist somit eine deutliche Funktionsverbesserung erzielbar. Insbesondere schwierige Fahrmanöver, wie sie bei allradangetriebenen Fahrzeugen im Off-Road-Bereich auftreten, lassen sich hiermit auch ohne Differentialsperren mit vergleichbarer Qualität durchführen, wie bei einem Kfz. mit dann drei mechanischen Sperren, wobei noch darauf hingewiesen sei, dass selbstverständlich eine Vielzahl von Details auch abweichend von oder ergänzend zu obigen Erläuterungen ausgeführt sein kann, ohne den Inhalt der Patentansprüche zu verlassen.

## Patentansprüche

1. Bremseingriffs-Regelungsverfahren zur Verhinderung von Radschlupf an den über ein Differential angetriebenen Rädern eines Kraftfahrzeugs, insbesondere eines allradangetriebenen Kfz's, wobei aufgrund eines geeigneten Signals das eine mangelhafte Traktion aufweisende Rad abgebremst wird,
**dadurch gekennzeichnet, dass** ausgehend von einem erstmaligen Abbremsen dieses Rades und unabhängig von weiteren die radindividuelle Traktion wiederspiegelnden Signalen der aufgebrachte Bremsdruck solange aufrecht erhalten wird, bis die Fahrzeug-Fahrgeschwindigkeit einen Schwellwert überschritten hat und/oder bis das Fahrzeug eine bestimmte Wegstrecke zurückgelegt hat.

2. Bremseingriffs-Regelungsverfahren nach Anspruch 1,
**dadurch gekennzeichnet, dass** der Schwellwert für die Fahrgeschwindigkeit in der Größenordnung zwischen 2 km/h und 5 km/h liegt und/oder dass die seit dem erstmaligen Abbremsen zurückgelegte Wegstrecke in der Größenordnung zwischen 3 m und 10 m liegt.

3. Bremseingriffs-Regelungsverfahren zur Verbinderung von Radschlupf an den über ein Differential angetriebenen Rädern eines Kraftfahrzeugs, insbesondere eines allradangetriebenen Kfz's, wobei aufgrund eines geeigneten Signals das eine mangelhafte Traktion aufweisende Rad abgebremst wird,
wobei aus den Höhenstandsinformationen der einzelnen Räder auf eine mangelhafte Traktion zumindest eines der Räder geschlossen wird,
**dadurch gekennzeichnet, dass** ausgehend von einem erstmaligen Abbremsen dieses Rades der aufgebrachte Bremsdruck solange aufrecht erhalten wird, als die entsprechende Höhenstandsinformation im wesentlichen noch zutrifft.

4. Bremseingriffs-Regelungsverfahren nach einem der vorangegangenen Ansprüche,
**dadurch gekennzeichnet, dass** der Bremsdruck am jeweiligen Rad unter Berücksichtigung des diesem Rad zugeführten Antriebsdrehmomentes eingestellt wird.

## Claims

1. A method of brake engagement control for preventing slip of wheels driven by a differential gear in a motor vehicle, especially a four-wheel drive vehicle, wherein the wheel with insufficient traction is braked by a suitable signal, **characterised in that** starting from initial braking of the wheel and irrespectively of other signals indicating the traction of the individual wheel, the brake pressure is maintained until the speed of the vehicle has exceeded a threshold value and/or until the vehicle has covered a certain distance.

2. A method according to claim 1, **characterised in that** the threshold speed is of the order of 2 to 5 km/h and/or the distance travelled after initial braking is of the order of 3 to 10 m.

3. A method of brake engagement control for preventing slip of wheels driven by a differential gear in a motor vehicle, especially a four-wheel drive vehicle, wherein the wheel with insufficient traction is braked by a suitable signal, wherein inadequate traction of at least one wheel is inferred from the level information for each wheel, **characterised in that** starting from initial braking engagement of the wheel, the applied brake pressure is maintained as long as the corresponding level information is still substantially correct.

4. A method according to any of the preceding claims, **characterised in that** the brake pressure on the wheel in question is adjusted to allow for the driving torque supplied to the wheel.

## Revendications

1. Procédé de régulation de l'action de freinage pour éviter le patinage de roue d'un véhicule à roue entraînée par un différentiel notamment un véhicule à quatre roues motrices, selon lequel, par un signal approprié, on freine la roue dont la traction est défaillante,
**caractérisé en ce que**
partant d'un premier freinage de cette roue et indépendamment d'autres signaux traduisant la traction individuelle, on maintient la pression de freinage appliquée jusqu'à ce que la vitesse de roulage du véhicule dépasse un seuil et/ou jusqu'à ce que le véhicule ait parcouru un certain trajet.

2. Procédé de régulation de l'action de freinage selon la revendication 1,
**caractérisé en ce que**
le seuil de la vitesse de roulage est de l'ordre de grandeur de 2 km/h et 5 km/h et/ou le trajet parcouru depuis le premier freinage est de l'ordre de grandeur de 3 m et 10 m.

3. Procédé de régulation de l'action de freinage pour éviter le patinage de roue entraînée par l'intermédiaire d'un différentiel d'un véhicule, notamment d'un véhicule à quatre roues motrices, selon lequel, à partir d'un signal approprié, on freine la roue dont la traction est défaillante, et à partir de l'information de niveau des différentes roues, on conclut à une traction défaillante de l'une des roues,
**caractérisé en ce que**
partant d'un premier freinage de cette roue, on maintient la pression de frein appliquée aussi longtemps que l'information de niveau subsiste pratiquement.

4. Procédé de régulation de l'action de freinage selon l'une quelconque des revendications précédentes,
**caractérisé en ce que**
l'on règle la pression de frein de la roue respective en tenant compte du couple moteur appliqué à cette roue.
